Europäisches Patentamt

European Patent Office

Office européen des brevets

(19)

(11) Publication number: **0 240 326**
A2

(12)

# EUROPEAN PATENT APPLICATION

(21) Application number: **87302814.6**

(22) Date of filing: **31.03.87**

(51) Int. Cl.⁴: **A 23 G 9/02**

(30) Priority: **31.03.86 IL 78346**

(43) Date of publication of application:
**07.10.87 Bulletin 87/41**

(84) Designated Contracting States:
**AT BE CH DE ES FR GB GR IT LI LU NL SE**

(71) Applicant: **BEN-GURION UNIVERSITY OF THE NEGEV RESEARCH AND DEVELOPMENT AUTHORITY**
**P.O. Box 1025**
**Beer-Sheva (IL)**

(72) Inventor: **Devshony, Shlomo**
**21 Barack Street**
**Beer Sheva (IL)**

(74) Representative: **Whalley, Kevin et al**
**MARKS & CLERK 57/60 Lincoln's Inn Fields**
**London WC2A 3LS (GB)**

(54) Powdered compositions for the manufacture of soft yogurt ice cream.

(57) The invention provides a powdered composition that upon mixing with milk or water and processing in a soft ice cream machine forms a natural yogurt soft ice cream containing live natural yogurt bacilli comprising about 0.3 to 15% of an edible acid, about 0.5 to 12% of one or more natural polysaccharide gums, about 0.03 to 90% sweetener, 0 to 4.0% cold water soluble gelatine, 0 to 7.0% of a pretreated starch, 0.2 to 8% of a dried natural yogurt powder containing live bacilli, about 0 to 50% of a dried milk powder, 0 to 4% food color, 0 to 4% food fruit flavours, 0 to 5% yogurt flavour and about 0 to 5% dehydrated fruit powders.

EP 0 240 326 A2

**Description**

POWDERED COMPOSITIONS FOR THE MANUFACTURE OF SOFT YOGURT ICE CREAM

The present invention relates to soft yogurt ice cream. More particularly the present invention relates to powdered compositions that upon mixing with milk or water and processing in a soft ice cream machine forms a natural yogurt soft ice cream containing live natural yogurt bacilli and to a method for the manufacture of a natural yogurt soft ice cream containing live natural yogurt bacilli using said powdered compositions.

Yogurt, is a milk product having a gelled texture and biologically acidified by means of Lactobacillus bulgaricus and Streptococcus thermophilus, the pH of which is about 4.1 to 4.6.

As described in U.S. Patent 3,080,236 the basic theory behind the use of yogurt has been to implant a beneficial culture of Bacillus bulgaricus-Lactobacillus acidophilus in a milk, to allow this milk to incubate until these particular species of bacilli sour the milk, and then chill the milk to prevent further growth. When this is consumed these bacilli pass unharmed through the stomach because these particular species favor an acid medium and are therefore not killed by the gastric juice. When these bacterial find their way into the intestine they may implant a favorable flora and in any case, whether the implant is made or not, beneficial vitamins are ingested as a result of the growth of the bacteria. The use of yogurt has become quite popular and common as it forms not only a heathful but a pleasant food substance which may be taken for its flavor, its health qualities, or its reputed regulatory effect on bowel movements.

When yogurt in its usual form is dehydrated it cannot be reconstituted into the smooth, creamy, pleasant tasting product by the simple addition of water, as might be expected.

It has been found that during drying the characteristic texture of the yogurt is lost, the yogurt reconstituted from yogurt powder with water remains fluid and the coagulated phase tends to separate rapidly from the aqueous phase.

Previous attempts to manufacture yogurt in powder form have resulted in a culture which could be implanted in milk and allowed to grow quickly and vigorously in a type of "do-it-yourself" yogurt manufacture. These attempts, however, at rapid manufacture of yogurt have resulted in poorly controlled growth conditions which yielded an inferior quality and taste.

The method described in US Patent 3 793 465 where a milk product is biologically acidified to pH of 4.2 and combined with a non-acidified milk product and acid compound with control release to yield a yogurt-like product has also proven to be too expensive and not practical.

In US Patent 3 917 875 there is described a powdered dessert composition suitable for mixing with milk to obtain an acidic dessert consisting essentially of 5.0 to 20.0 percent of a cold water-soluble gelatin, 0.2 to 5.0 percent of of a stabilizer, 5.0 to 25.0% of a pregelatinized starch, 2.0 to 7.0 percent of a food acid, 40.0 to 75.0 percent of a sweetening agent, from 0.0 to 25.0 percent yogurt powder, from 0.0 to 10.0 percent of an emulsifier and from 0.0 to an effective amount of color and flavoring ingredients, all percentage being by weight of the powdered dessert composition, which patent does not rely on dry yogurt powder culture and instead uses a natural acid to achieve the acidifying effect.

In Israel Patent 54049 there is described and claimed a powdered composition suitable for mixing with milk to obtain an acidified milk product comprising, per liter liquid, about 10 to about 50 g of an acidogen and about 2.5 to about 15 g of a mild acidic buffer as well as providing a powdered composition suitable for mixing with water to obtain an acidified milk product comprising per liter about 10 to about 50 g of an acidogen, about 2.5 to 15 g of a mild acidic buffer and about 90 to about 240 g dry milk.

This patent relies on the use of an acidogen to achieve the acidifying effect and also does not rely on dry yogurt powder culture.

In contradistinction to said prior art compositions the present invention provides a powdered composition that upon mixing with milk or water and processing in a soft ice cream machine forms a natural yogurt soft ice cream containing live natural yogurt bacilli comprising about 0.3 to 15% of an edible acid, about 0.5 to 12% of one or more natural polysaccharide gums, about 0.03 to 90% sweetener, 0 to 4.0% cold water soluble gelatine, 0 to 7.0% of a pretreated starch, 0.2 to 8% of a dried natural yogurt powder containing live bacilli, about 0 to 50% of a dried milk powder, 0 to 4% food color, 0 to 4% food fruit flavours 0 to 5% yogurt flavour and about 0 to 5% dehydrated fruit powders.

A preferred composition according to the present invention is one that upon mixing with water and processing in a soft ice cream machine forms a natural yogurt soft ice cream comprising about 1.0% to 2.0% of an edible acid, 1.0% to 3% of one or more natural polysaccharide gums, 0.5% to 60.0% sweeteners, 0.2% to 0.8% of a cold water soluble gelatine, 0.0% to 3.0% of a pretreated starch, 0.1% to 1.5% of a dried natural yogurt containing live bacilli, 25% to 50% of powdered milk, 0.1% to 0.5% color, 0.0% to 1.0% fruit flavor and about 0.2% to 3.0% yogurt flavor.

Another preferred composition according to the present invention is one that upon mixing with milk and processing in a soft ice cream machine forms a natural yogurt soft ice cream comprising about 2.0% to 10.0% an edible acid, 0.5% to 7.0% of one or more natural polysacchride gums, 0.1% to 90.0% of sweeteners, about 0.1% to 2.0% of a cold water soluble gelatine, 0.0% to 6.0% of a pretreated starch, 0.1% to 2.0% of a dried natural yogurt containing live bacilli, 0.1% to 2.0% of dried milk powder, 0.0% to 1.5% of color, 0.0% to 1.5% of a fruit flavour and about 0.2% to 1.5% of yogurt flavor.

In US Patent 3 080 236 there is described an instant yogurt product adapted when mixed with water to form a

2

synthetic yogurt composition, said product comprising dried yogurt culture, a water soluble dried milk, an edible vegetable oil and a water-soluble dried starch, which product is based on a powdered yogurt culture, which is dried in a vacuum drier to overcome some of the prior dehydrating and reconstituting difficulties. However in its preferred embodiments said composition comprises about 10 to 25 % of a water soluble starch which substantially interferes with the desired taste and texture of the finished product and contains 9 to 50% dried yogurt culture which substantially raises the cost of the product.

The present invention also provides a method for the manufacture of a natural yogurt soft ice cream containing live natural yogurt bacilli by the steps comprising:

a) forming a powdered dry mix composition comprising about 0.3 to 15% of an edible acid, about 0.5 to 12% of one or more natural polysaccharide gums, about 0.3 to 90% sweeteners, 0 to 4.0% cold water soluble gelatine, 0 to 7.0% of a pretreated starch, 0.2 to 6% of a dried natural yogurt powder containing live bacilli, about 0 to 50% of a dried milk powder, 0 to 4.0% food color, 0 to 4% food fruit flavors, 0 to 5% yogurt flavor and about 0 to 5% dehydrated fruit powder;

b) mixing said dry mix composition with water or milk in a ratio of between about 1 kilo dry mix to three liters liquid and 1 kilo dry mix to six liters liquid; and

c) introducing the mixture into a soft ice cream machine.

In a preferred embodiment of the present invention said method comprises mixing between about 1.2 to 1.6 kilo dry mix per five liters of water and preferably mixing about 750 to 850 g of dry mix composition for each three litres of water.

In another preferred embodiment of the present invention said method comprises mixing between about 750 to 1300 g dry mix per 6 litres of milk, and preferably mixing about 500 to 600 g of dry mix composition for each three litres of milk.

Thus a powdered soft ice cream precursor composition according to the invention which is to be mixed with water for processing in a soft ice cream machine can contain about 4.0 to 230 g of an edible acid, about 5 to 175 g of one or more natural polysaccharide gums, about 0.5 to 1300 g sweetener, 0 to 60 g cold water soluble gelatine, 0 to 10 g of a pretreated starch, 1 to 40 g of a dried natural yogurt powder containing live bacilli, about 0 to 750 of a dried milk powder, 0 to 50 g food color, 0 to 60 g food fruit flavours 0 to 75 g yogurt flavour and about 0 to 60 g dehydrated fruit powders.

Preferably such a composition will contain about 13 to 25 g of an edible acid, about 15 to 45 g of one or more natural polysaccharide gums, about 8 to 900 g sweetener, 3 to 12g cold water soluble gelatine, 0 to 5 g of a pretreated starch, 0.5 to 7 g of a dried natural yogurt powder containing llive bacilli, about 375 to 799 g of a dried milk powder, 0 to 6 g food color, 0 to 7 g food fruit flavours, 30 to 45 g yogurt flavor and about 0 to 8 g dehydrated fruit powders.

About 780 to 820 g of such a composition are preferably mixed with three litres of water and introduced into a soft ice cream machine to produce almost four kilograms of a natural yogurt soft ice cream containing live natural yogurt bacilli.

Similarly a powdered soft ice cream precursor composition according to the invention which is to be mixed with milk for processing in a soft ice cream machine can contain about 1 to 80 g an edible acid, 1 to 65 g of one or more natural polysaccharide gums, 0.5 to 500 g of sweeteners, about 0 to 22 g of a cold water soluble gelatine, 0 to 5 g of a pretreated starch, 1 to 30 g of a dried natural yogurt containing live bacilli, 1 to 9 g of dried milk powder, 0 to 7 g of color, 0 to 7 g of a fruit flavour, about 1 to 30 g of yogurt flavor and about 0 to 20 g of dehydrated fruit powders.

Preferably such a composition will contain about 10 to 20 g an edible acid, 3 to 30 g of one or more natural polysacchride gums, 1 to 400 g of sweeteners, about 3 to 11 g of a cold water soluble gelatine, 0 to 2 g of a pretreated starch, 1 to 6 g of a dried natural yogurt containing live bacilli, 1 to 6 g of dried milk powder, 0 to 5 g of color, 0 to 5 g of a fruit flavour, about 1 to 8 g of yogurt flavor and about 0 to 7 g of dehydrated fruit powders.

About 520 to 560 g of such a composition are preferably mixed with three litres of milk and introduced into a soft ice cream machine to produce about three and a half kilograms of a natural yogurt soft ice cream containing live natural yogurt bacilli.

It is to be emphasized that heretofor soft ice cream yogurt was produced from a liquid which was deep frozen for shipment and delivery to the stores where the soft ice cream machines were situated and as a result the bacilli were substantially destroyed by the deep freezing process and no health advantages accrued from the eating thereof.

In contradistinction the present invention provides for the first time a powdered composition that upon mixing with milk or water and processing in a soft ice cream machine forms a natural yogurt soft ice cream containing live natural yogurt bacilli said composition using dried natural yogurt powder containing live bacilli prepared by methods known per se which powder need not be subjected to deep freezing and which in combination with the other ingredients of the present composition forms a natural soft yogurt ice cream possessing pleasing taste and texture.

Thus the invention is also directed to the sale of the present compositions together with instructions for mixing with milk or water and processing in a soft ice cream machine to form a natural yogurt soft ice cream containing live natural yogurt bacilli.

In order to reduce the calory content of the products, part or all of the sweeteners to be included in the powder, can be other than the usual carbohydrates (sugars). Still less calories can be arrived at by reduction of butterfat content by using skimmed milk in the powder composition and skimmed liquid milk in the powder-liquid mixture. However, if sweetening carbohydrates are reduced the content of stabilizers must be increased to maintain a good texture of the ice-creams.

The natural polysaccharide gums are preferably selected from guar gum, carob gum, xantham gum and mixtures thereof. Almost any edible acid such as citric, tartaric, acetic, malic, lactic, fumaric, ascorbic, etc. can be used, although citric acid is preferred.

The instant gelatine preferably will be at least 95 percent pure gelatine and in the following examples the instant gelatine used was Cryogel(R) obtained from Pb. Gelatine Belgium which is advertised as being 100 percent pure gelatine.

The powdered composition, when kept dry can be stored for many months at ambient temperatures, maintaining its full aroma, flavor and general texture upon mixing with milk or water.

These soft, flavored products have a smooth delicate creamy consistancy as would be expected of high quality ice-creams and naturally produced cultured milk products.

While the invention will now be described in connection with certain preferred embodiments in the following examples so that aspects thereof may be more fully understood and appreciated, it is not intended to limit the invention to these particular embodiments. On the contrary, it is intended to cover all alternatives, modifications and equivalents as may be included within the scope of the invention as defined by the appended claims. Thus, the following examples which include preferred embodiments will serve to illustrate the practice of this invention, it being understood that the particulars shown are by way of example and for purposes of illustrative discussion of preferred embodiments of the present invention only and are presented in the cause of providing what is believed to be the most useful and readily understood description of formulation procedures as well as of the principles and conceptual aspects of the invention.

Example 1:

```
    an apricot/yogurt ice cream precurser to be mixed with milk:

citric acid          12.0 gr - 2.2% of the powder composition

guar gum             12.0 gr - 2.2% of the powder composition

Cryogel               4.5 gr - 0.8% of the powder composition

yogurt flavor         7.5 gr - 1.4% of the powder composition

cultured milk powder  3.5 gr - 0.7% of the powder composition

sugar               485.0 gr -90.0% of the powder composition

apricot flavor        2.5 gr - 0.5% of the powder composition

color                 2.5 gr - 0.5% of the powder composition

milk powder           5.0 gr - 1.0% of the powder composition

                    534.0 gr
```

The above powder was mixed with 3.0 litre milk and processed in a soft ice cream machine.

Example 2:

A strawberry/yogurt ice cream precurser to be mixed with milk:

| | | |
|---|---|---|
| citric acid | 13.5 gr - 2.5% | of the powder composition |
| carob gum | 1.8 gr - 0.3% | of the powder composition |
| guar gum | 15.0 gr - 2.8% | of the powder composition |
| yogurt flavor | 6.0 gr - 1.1% | of the powder composition |
| pretreated starch | 4.5 gr - 0.8% | of the powder composition |
| skim milk powder | 10.5 gr - 1.9% | of the pwoder composition |
| sugar | 485.0 gr -89.0% | of the powder composition |
| strawberry flavor | 4.5 gr - 0.8% | of the powder composition |
| color | 3.8 gr - 0.7% | of the powder composition |
| dry cultured milk | 2.0 gr - 0.4% | of the powder composition |
| | 546.6 | |

The above powder was mixed with 3.0 lit. milk and processed in a soft ice cream machine.

Example 3:

A cherry/yogurt ice cream precurser to be mixed with water.

| | | |
|---|---|---|
| citric acid | 12.4 gr - 0.8% | of the powder composition |
| guar gum | 20.0 gr - 1.3% | of the powder composition |
| yogurt flavor | 30.0 gr - 2.0% | of the powder composition |
| cold water soluble gelatine | 7.5 gr - 0.5% | of the powder composition |
| color | 2.5 gr - 0.2% | of the powder composition |
| cherry flavor | 3.5 gr - 2.4% | of the powder composition |
| skim milk | 600.0 gr -40.0% | of the pwoder composition |
| sugar | 800.0 gr -54.0% | of the powder composition |
| | 1475.0 gr | |

The above mixture was mixed with 5.0 lit of water and processed in a soft ice cream machine.

It will be evident to those skilled in the art that the invention is not limited to the details of the foregoing illustrative examples and that the present invention may be embodied in other specific forms without departing from the essential attributes thereof, and it is therefore desired that the present embodiments and examples be considered in all respects as illustrative and not restrictive, reference being made to the appended claims, rather than to the foregoing description, and all changes which come within the meaning and range of equivalency of the claims are therefore intended to be embraced therein.

## Claims

1. A powdered composition that upon mixing with milk or water and processing in a soft ice cream machine will form a natural yogurt soft ice cream containing live natural yogurt bacilli, characterized by comprising about 0.3 to 15% of an edible acid, about 0.5 to 12% of one or more natural polysaccharide gums, about 0.03 to 90% sweetener(s), about 0 to 4.0% cold water soluble gelatine, about 0 to 7.0% of a pretreated starch, about 0.2 to 8% of a dried natural yogurt powder containing live bacilli, about 0 to 50% of a dried milk powder, about 0 to 4% food color(s), about 0 to 4% food fruit flavour(s), about 0 to 5% yogurt flavour(s) and about 0 to 5% dehydrated fruit powder(s).

2. A powdered composition as claimed in claim 1, that upon mixing with water and processing in a soft ice cream machine forms a natural yogurt soft ice cream, characterized by comprising about 1.0% to 2.0% of an edible acid, 1.0% to 3% of one or more natural polysaccharide gums, 0.5% to 60.0% sweetener(s), 0.2% to 0.8% of a cold water soluble gelatine, 0.0% to 3.0% of a pretreated starch, 0.1% to 1.5% of a dried natural yogurt containing live bacilli, 25% to 50% of powdered milk, 0.1% to 0.5% color, 0.0% to 1.0% fruit flavour and about 0.2% to 3.0% yogurt flavor.

3. A powdered composition as claimed in claim 1, that upon mixing with milk and processing in a soft ice cream machine forms a natural yogurt soft ice cream, characterized by comprising about 2.0% to 10.0% of an edible acid, 0.5% to 7.0% of one or more natural polysaccharide gums, 0.1% to 90.0% of sweetener(s), about 0.1% to 2.0% of a cold water soluble gelatine, 0.0% to 6.0% of a pretreated starch, 0.1% to 2.0% of a dried natural yogurt containing live bacilli, 0.1% to 2.0% of dried milk powder, 0.0% to 1.5% of color, 0.0% to 1.5% of fruit flavour and about 0.2% to 1.5% of yogurt flavor.

4. A powdered composition as claimed in any of claims 1 to 3, together with instructions for mixing with milk or water and processing in a soft ice cream machine to form a natural yogurt soft ice cream containing live natural yogurt bacilli.

5. A method for the manufacture of a natural yogurt soft ice cream containing live natural yogurt bacilli, characterized by comprising the steps of:
   a) forming a powdered dry mix composition comprising about 0.3 to 15% of an edible acid, about 0.5 to 12% of one or more natural polysaccharide gums, about 0.3 to 90% sweetener(s), about 0 to 4.0% cold water soluble gelatine, about 0 to 7.0% of a pretreated starch, about 0.2 to 8% of a dried natural yogurt powder containing live bacilli, about 0 to 50% of a dried milk powder, about 0 to 4.0% food color(s), about 0 to 4% food fruit flavor(s), about 0 to 5% yogurt flavor(s) and about 0 to 5% dehydrated fruit powder(s);
   b) mixing said dry mix composition with water or milk in a ratio of from about 1 kilo dry mix to three liters liquid to 1 kilo dry mix to six liters liquid; and
   c) introducing the mixture into a soft ice cream machine.

6. A method as claimed in claim 5, characterized by mixing from about 1.2 to 1.6 kilo dry mix per five liters of water.

7. A method as claimed in claim 5, characterized by mixing about 750 to 850g of dry mix composition for each three liters of water.

8. A method as claimed in claim 5, characterized by mixing from about 750 to 1300 g dry mix per 6 litres of milk.

9. A method as claimed in claim 5, characterized by mixing about 500 to 600g of dry mix composition for each three litres of milk.